# EUROPEAN PATENT APPLICATION

(11) **EP 4 794 309 A1**
(43) Date of publication of application: **19.08.2026**
(21) Application number: 26159418.8
(22) Date of filing: 18.02.2026
(51) Int. Cl.: H04L 67/562

(54) **MANAGEMENT SYSTEM AND CLIENT FOR A MESSAGING SYSTEM**

(30) Priority: 18.02.2025 US 202519056372
(71) Applicant: HiveMQ GmbH, 84028 Landshut (DE)
(72) Inventor: JOHNSON, Simon, 84028 Landshut (DE); MCCUNE, Magnus, 84028 Landshut (DE)
(74) Representative: EIP

(57) **Abstract**

A method comprising generating an information hierarchy comprising one or more nodes corresponding to respective data sources, wherein each of the one or more nodes is associated with one of a plurality of predetermined types defining a respective set of one or more parameters associated with a node of that type, messages based on data generated by the data sources are published within a publish/subscribe messaging system in accordance with a publish/subscribe messaging protocol, the publish/subscribe messaging system comprises a publish/subscribe data broker, and one or more publisher clients, each publisher client being associated with one or more of the data sources and generating the messages based on the data generated by the one or more data sources, the messages each comprise a payload and a topic, and the information hierarchy is generated based on the topic of one or more of the messages.

## Description

### Technical Field

The present disclosure relates to the operation of a client and a management system associated with a messaging system.

### BACKGROUND

In order to coordinate the communication of data between numerous data sources and entities which make use of that data, a data broker may act as an intermediary by maintaining a record of subscriber clients who wish to receive data transmitted by publisher clients (which may be, for example, sensor data generated at a remote device). The use of a data broker can produce a faster and more efficient communication system, by eliminating the need for direct communication between the publisher and subscriber clients.

A feature of a publish/subscribe architecture is that a publisher client may not be aware of the identity, or even existence, of any subscriber client which has established a connection for its published data. This can reduce the complexity of operation of a publisher client, compared to a device which is required to establish and maintain connections with all devices to which its data is transmitted.

In accordance with a publish/subscribe messaging protocol, a data broker may forward (i.e. publish) received data towards subscriber clients without modifying this data. This means that high volumes of data can be efficiently handled by a data broker, which can maintain connections for the receipt and transmission of data with many publisher clients and subscriber clients. Each publisher client may generate messages associated with multiple data sources, and each data source may itself generate multiple data streams. The multiple publisher clients, data sources, data streams may be configured to operate in different ways; for example, encoding data in different formats.

There is therefore a need for an improved messaging system.

### SUMMARY

Examples disclosed herein provide a method comprising generating an information hierarchy comprising one or more nodes corresponding to respective data sources, wherein each of the one or more nodes is associated with one of a plurality of predetermined types defining a respective set of one or more parameters associated with a node of that type, messages based on data generated by the data sources are published within a publish/subscribe messaging system in accordance with a publish/subscribe messaging protocol, the publish/subscribe messaging system comprises a publish/subscribe data broker, and one or more publisher clients, each publisher client being associated with one or more of the data sources and generating the messages based on the data generated by the one or more data sources, the messages each comprise a payload and a topic, and the information hierarchy is generated based on the topic of one or more of the messages.

The present disclosure also provides a method comprising accessing, by a client in a publish/subscribe messaging system in which messages based on data generated by data sources are published within a publish/subscribe messaging system in accordance with a publish/subscribe messaging protocol, one or more of the messages, identifying, based on the one or more messages, nodes of an information hierarchy and a respective location within the hierarchy of the nodes, the information hierarchy comprising one or more nodes corresponding to respective data sources, generating a representation of the information hierarchy, and transmitting the representation of the information hierarchy to a management system of the publish/subscribe messaging system.

A further method provided by the present disclosure comprises selecting one or more clients in a publish/subscribe messaging system in which messages based on data generated by data sources are published within a publish/subscribe messaging system in accordance with a publish/subscribe messaging protocol, transmitting to the selected one or more subscriber clients a request to generate a representation of an information hierarchy comprising one or more nodes corresponding to respective data sources, and receiving from the selected one or more subscriber clients the respective representations of the information hierarchy, wherein the publish/subscribe messaging system comprises a publish/subscribe data broker and one or more publisher clients, each publisher client being associated with one or more of the data sources and generating the messages based on the data generated by the one or more data sources.

Also provided are corresponding systems.

Examples can provide a representation of data sources within a messaging system which is already in operation. The information hierarchy can be used as a basis for defining processing within a system.

Further features and advantages will become apparent from the following description of implementation details, given by way of example only, which is made with reference to the accompanying drawings.

### BRIEF DESCRIPTION OF THE DRAWINGS

Figure 1 shows, schematically, an arrangement of equipment in a system in which examples of the present disclosure may be deployed.
Figure 2 shows an example of a portion of an information hierarchy corresponding to the system shown in Figure 1 in accordance with examples of the present disclosure.
Figure 3 illustrates examples of the use of agents in the context of the information hierarchy to implement processing of messages in accordance with examples.
Figure 4 shows an example of mapping information for nodes in an information hierarchy, in accordance with examples of the present disclosure.
Figure 5A is a combined process and message sequence chart in which an information hierarchy (or a portion thereof) is automatically determined in accordance with examples of the present disclosure.
Figure 5B shows schematically the contents of messages transmitted in the process shown in Figure 5A, in accordance with examples.
Figure 6A, Figure 6B and Figure 6C show examples of the representation of the information hierarchy determined from the process shown in Figure 5a, in accordance with examples.
Figure 7 is a simplified network diagram showing some of the elements shown in Figure 1, arranged in accordance with examples of the present disclosure.
Figure 8 is a simplified block diagram of a data broker system in accordance with examples.
Figure 9 is a simplified block diagram of a client system in accordance with examples.
Figure 10 is a simplified block diagram of a management system in accordance with examples.

### DETAILED DESCRIPTION

Details of systems and methods according to examples will become apparent from the following description with reference to the figures. In this description, for the purposes of explanation, numerous specific details of certain examples are set forth. Reference in the specification to 'an example' or similar language means that a feature, structure, or characteristic described in connection with the example is included in at least that one example but not necessarily in other examples. It should be further noted that certain examples are described schematically with certain features omitted and/or necessarily simplified for the ease of explanation and understanding of the concepts underlying the examples.

Examples of the present disclosure relate to accessing messages in a messaging system. Some examples described herein can allow the determination of an arrangement of data sources and/or data streams present in an operational publish/subscribe messaging system.

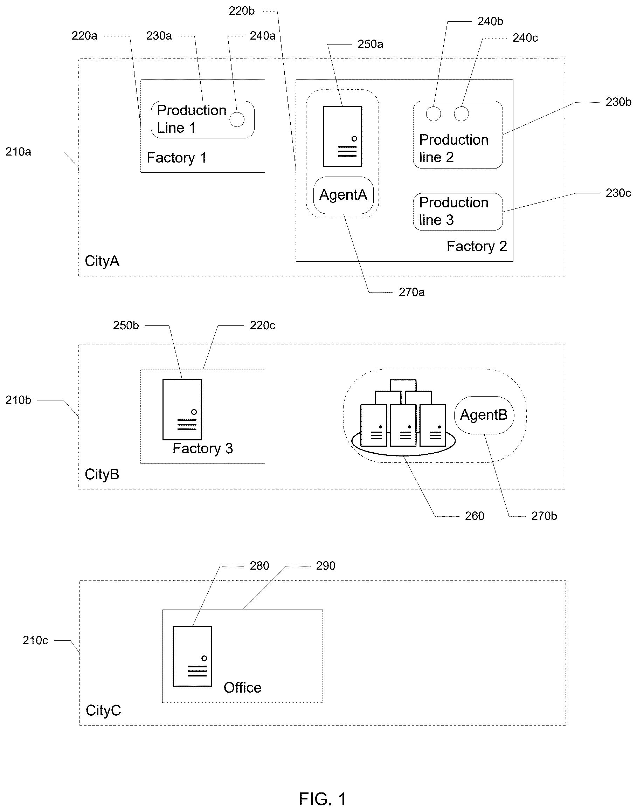

An example of a system in which examples of the present disclosure may be deployed is shown in Figure 1.

Figure 1 shows, schematically, an arrangement of equipment associated with an example organisation 'Mfgco'. The equipment of the organisation is arranged within three geographical regions 210a-c, which are referred to as CityA, CityB and CityC.

Within the CityA region 210a there are two sites, 220a, 220b (called 'Factory1' and 'Factory2') and within the CityB region 210b there is one site 220c called 'Factory3'. Equipment at the 'Factory3' site 220c is not shown in Figure 1. An office 290 is located in the CityC region 210c.

At some of the sites, production lines operate. In the example of Figure 1, one production line 230a ('Production line 1') operates within the 'Factory1' site 220a and two production lines 230b, 230c ('Production line 2', 'Production line 3') operate within the 'Factory2' site 220b.

Sensor devices 240 operate to monitor the status of some of the production lines 230. Specifically, a first sensor device 240a measures a temperature, a flow rate and a cumulative volume on the 'Production line 1' production line 230a. A second sensor device 240b and a third sensor device 240c measure, respectively, a flow rate and a temperature on the 'Production line 2' production line 230b.

The sites 220, production lines 230, and sensor devices 240 collectively are related to the primary operations of the example organisation 'Mfgco' and are accordingly referred to herein as the 'operations system'.

In addition to the operations system, a publish/subscribe messaging system is deployed in the example organisation of Figure 1.

In general, a publish/subscribe messaging system comprises a publish/subscribe data broker, one or more publisher clients and one or more subscriber clients. In some examples of the present disclosure, there may be no subscriber clients.

A data broker receives messages published by publisher clients, determines whether each message falls within the scope of a subscription associated with a subscriber client and, if so, forwards a copy of the message to the subscriber client. The transmission of messages within the publish/subscribe system may be in accordance with a publish/subscribe messaging protocol, such as MQTT or MQTT-SN.

Other control packets may be sent between publisher clients or subscriber clients and the data broker. These may be in accordance with the messaging protocol. These may be for the purpose of establishing, maintaining, or closing a connection between a client and the data broker, or for the purpose of creating, modifying, or cancelling a subscription of a subscriber client.

A client in the publish/subscribe messaging system may be simultaneously a publisher client and a subscriber client. In some examples, there may be more than one data broker.

The publish/subscribe messaging system may enable the communication of data between other entities in the system. Messages published by a publisher client may comprise a representation of data generated at a data source. Sensor devices (such as the sensor devices 240 in Figure 1) which measure physical properties (e.g., temperature, pressure, flow rate, electrical voltage) are examples of data sources, and the measurements are examples of the data. However, the present disclosure is not so limited.

A data source may generate one or more 'data streams', each data stream comprising one or more data points of a particular type. For example, a weather sensor may generate a temperature data stream, comprising temperature measurements every minute and a pressure data stream, comprising atmospheric pressure measurements every 10 minutes.

A data source may be integrated together with a publisher client ('integrated publisher client'), in which case the data source itself publishes messages indicating data, and forms part of the publish/subscribe messaging system.

Alternatively, a data source may transmit information representing the data to an 'edge publisher client'. The edge publisher client receives the information from the data source and generates and publishes messages representing the data in accordance with the publish/subscribe messaging protocol.

An edge publisher client can allow the use of the publish/subscribe messaging system for the transmission of data generated at a data source which is not part of the publish/subscribe messaging system. This may be because the data source is not capable of directly connecting to the data broker and/or does not support the publish/subscribe messaging protocol. An edge publisher client may be connected to multiple data sources.

Messages may comprise a topic and a payload. The topic may be used by subscriber clients to indicate a scope of a subscription. In some examples, a topic of a message identifies a data source which generated the data which is indicated in the payload of the message. The publish/subscribe messaging protocol may impose requirements on the format of the topic. In some examples, a data stream is associated with a single topic, so that the topic indicates the data stream whose data is included in a message. In some examples, data from multiple data streams is included in a single payload.

In the example organisation 'Mfgco' shown in Figure 1, a publish/subscribe messaging system operates in accordance with a publish/subscribe messaging protocol. The publish/subscribe messaging system comprises a data broker 260 and edge publisher clients 250. The first sensor device 240a is capable of communicating in accordance with the publish/subscribe messaging protocol and operates as an integrated publisher client.

The data broker 260 is in operation within the CityB region 210b. The first edge publisher client 250a and second edge publisher client 250b are deployed, respectively, within the 'Factory2' site 220b and within the 'Factory3' site 220c. The first edge publisher client 250a is connected to the second sensor device 240b and the third sensor device 240c, and generates messages based on data generated by the second sensor device 240b and the third sensor device 240c. The second edge publisher client 250b is connected to devices within the 'Factory3' site, not shown in Figure 1.

The edge publisher clients 250 and integrated publisher client 240a can connect to the data broker 260 via any suitable communications network, and the communications network may be formed of any suitable communications links, which may operate in accordance with suitable protocols. For example, the communications network may comprise one or more of a wireless cellular network, a wireless local area network, a wired local area network and a wide area network. The publish/subscribe messaging protocol may impose minimum requirements on the capability of the communications network. For example, where the publish/subscribe messaging protocol is MQTT or MQTT-SN, the communications network may support internet protocol, IP, based communication. Accordingly, in some examples, the data broker 260 comprises an MQTT server, and the first edge publisher client 250a, second edge publisher client 250b and integrated publisher client 240a may comprise MQTT clients.

No subscriber clients are shown in the example of Figure 1; however it will be appreciated that one or more subscriber clients may be present in examples.

Publish/subscribe messaging systems are designed to efficiently transfer large quantities of data within or between organizations, and such systems can be scaled to support very large numbers of data sources, data streams (and associated publisher clients), and subscriber clients. However, systems which make use of the data may have to be suitable for receiving and processing large volumes of data at a very high rate. Where the data is received in a form which requires further processing, this can require significant processing capabilities at the receiving device.

There is therefore a need to provide an improved publish/subscribe messaging system.

In examples of the present disclosure, a management system and client are provided as part of the publish/subscribe messaging system.

An agent has access to messages within the publish/subscribe messaging system and is capable of processing messages within the publish/subscribe messaging system. Examples of such processing include:
- extracting information from a message (the information may be within the topic or payload of a message);
- modifying the payload of a message;
- generating and transmitting a new message;
- destroying a message (i.e., preventing onward publication of the message, irrespective of any subscription that would include the message in its scope); and
- performing processing operations on the extracted information from one or more messages.

An agent communicates with the management system. In some examples, the agent and management system are themselves clients of the publish/subscribe messaging system and use the publish/subscribe messaging system to communicate. However, the present disclosure is not so limited, and any suitable communication technique may be used.

Co-pending patent application PUBLISH/SUBSCRIBE MESSAGING SYSTEM CLIENT AND DATA BROKER, AND SERVICE CLIENT describes a system for a behavior model deployed at a data broker. Collectively, the behavior model run time function and behavior model manager and associated memory described therein are an example of an agent in the present disclosure. System clients described in PUBLISH/SUBSCRIBE MESSAGING SYSTEM CLIENT AND DATA BROKER, AND SERVICE CLIENT are examples of the management system of the present disclosure.

In examples of the present disclosure, there may be two or more agents in the management/agent system.

An agent may be associated with an edge publisher client or a data broker. An agent associated with an edge publisher client may generally have access to, and may be able to process, messages generated at the edge publisher client. An agent associated with a data broker may generally have access to, and may be able to process, messages generated at (including those forwarded in accordance with a subscription) or received at, the data broker.

An agent may be a standalone agent which has access to, and can process, messages passing through a particular point in the communications network which connects other elements of the publish/subscribe messaging system.

In the example of Figure 1, a first agent 270a ('AgentA') is associated with the first edge publisher client 250a, and a second agent 270b ('AgentB') is associated with the data broker 260. Accordingly, the first agent 270a is able to monitor messages generated at the first edge publisher client 250a and can perform other processing based on the data that is, or could be, represented in messages generated by the first edge publisher client 250a. The second agent 270b, being associated with the data broker 260, is able to monitor all messages received at, or generated at the data broker 260 and can accordingly process messages at the data broker 260.

The first agent 270a and the second agent 270b are connected to a management system 280. The management system 280 may provide a user interface either directly at the management system 280, or indirectly (for example, by providing a web server function to a web client, where the user interface is generated at the web client based on data generated at the web server of the management system 280).

Processing at an agent 270 may be in accordance with instructions generated at the management system 280.

In the example of Figure 1, there is only a single management system 280 shown. However, in other examples, there are two or more management systems.

In examples of the present disclosure, an information hierarchy is determined. In some examples, the determined information hierarchy is used to define processing to be carried out by one or more agents within the publish/subscribe messaging system. In some examples, the information hierarchy is used in a user interface to allow a user to discern the arrangement of data sources and/or data streams within the publish/subscribe messaging system, and/or to provide the basis for a user interface for allowing the user to define desired processing to be carried out by the one or more agents.

The information hierarchy comprises a hierarchical arrangement of two or more nodes. A node may correspond to a physical entity in the system, or a data stream. For example, a node may represent a particular data source. In some examples, the hierarchy comprises at least one node corresponding to a data source. In some examples, the hierarchy comprises at least one node corresponding to a data stream.

Within the hierarchy, one or more nodes at a particular level may be arranged as child nodes of a parent node at a higher level. Each node may have exactly one immediate parent node and may have one further parent node at each layer of the hierarchy which is higher than that of its immediate parent node. In the present disclosure, a 'child node' of a particular node refers to a node which i) is at a layer of the information hierarchy which is lower than the layer in which the particular node is located and ii) is within the portion of the information hierarchy whose root node is the particular node.

A node may represent a category of nodes, where the child nodes of the 'category' node fall within the respective category definition. Examples of categories of nodes include a location or region within which other nodes are located. These categories may be hierarchical. For example, the child nodes of a site node may be those nodes corresponding to data sources which are located at that site. The child nodes of an enterprise node may be all of the nodes which are associated with an enterprise; this may include one or more site nodes and the child nodes of those factory nodes.

Accordingly, an information hierarchy of nodes can be defined, where the location of a node corresponding to a data stream in the information hierarchy corresponds to a relative location of a corresponding data source in a topology of data sources. The topology may define a physical location of a data source, such as within geographic regions, sites, buildings, floors, groups of equipment or production lines. In general, the topology may be any suitable representation of the data sources and may indicate a logical arrangement of data sources, a physical location of data sources, or a combination of both. For example, a topology of data sources associated with consumer products may indicate a physical location of a data source within a world region and, at a lower layer, a logical grouping of data sources associated with a particular brand, and at yet a lower layer, a logical grouping of data sources associated with a particular device model.

In general, the hierarchy may reflect the topology, in that successively lower levels in the information hierarchy correspond to successively finer granularity. A data stream node may be a child node of a data source node. A 'derived' data node may be a child node of a data stream node; for example, a node corresponding to a data stream of pressure measurements may have child nodes corresponding to a maximum value, a minimum value, and a (windowed) average value of the pressure measurements.

In some examples, the information hierarchy is consistent with a hierarchy used in topics used in the publish/subscribe messaging system; that is, levels within the topic namespace correspond to levels in the information hierarchy disclosed herein, and nodes may correspond to components in the topic namespace.

In some examples, the information hierarchy does not correspond to the hierarchy used in topics in the publish/subscribe messaging system. For example, topics in the publish/subscribe messaging system may conform to a topic naming convention, such as that specified in the Sparkplug B version 1.0 specification, in which the topic hierarchy does not correspond to a topology as described above. In the example of Sparkplug B version 1.0, for example, a topic includes a message type and a group ID. The message type does not indicate a location of a corresponding data source, and the group ID may be encoded in an arbitrary manner - for example, it may comprise a sequentially allocated number irrespective of a location of a data source in the topology. In some examples, the topics have been manually configured at the data sources.

In some examples, the topics in the publish/subscribe messaging system comply with an ISA-95 standard. In some examples, topics in the publish/subscribe messaging system may be assigned using a combination of approaches.

In general, the topics used within the publish/subscribe messaging system may not be intuitive and/or may not indicate a relative location of a node (which may be a node associated with a data source or data stream) within a topology of an organisation. Accordingly, examples of the present disclosure can provide a more intuitive and consistent representation of data streams and data sources within an organisation. This can facilitate an improved user interface, in which a user can readily determine where, in a relevant topology of an organisation, a data source or data stream is located and accordingly provides a basis for more readily specifying desired processing to be carried out in respect of messages within the publish/subscribe messaging system.

A node may be associated with a node type. A node type may define parameters associated with a node of that type. A node may be associated with a node identifier (e.g., a system-wide unique identifier of the node). A node type may therefore define parameters which include the node identifier in addition to one or more further parameters. One or more of the node types may be predefined node types. In some examples, all nodes are associated with a node type. In some examples, one or more nodes is not associated with a node type.

A data source node type may define parameters such as a data source manufacturer name and a data source model name. By way of example, a data stream node type may define parameters to indicate one or more of the type of data (e.g., temperature, pressure, voltage), unit of measurement, accuracy, and frequency of measurement. In some examples, values for all parameters associated with a node, according to its node type, are determined. In some examples, one or more parameter values are not determined for a node.

A node type for nodes that are higher in the information hierarchy may have parameters depending on a type of category. For example, a node type for a region node may have parameters which define a bounding region; a node type for a site node may have parameters which define a location of the factory.

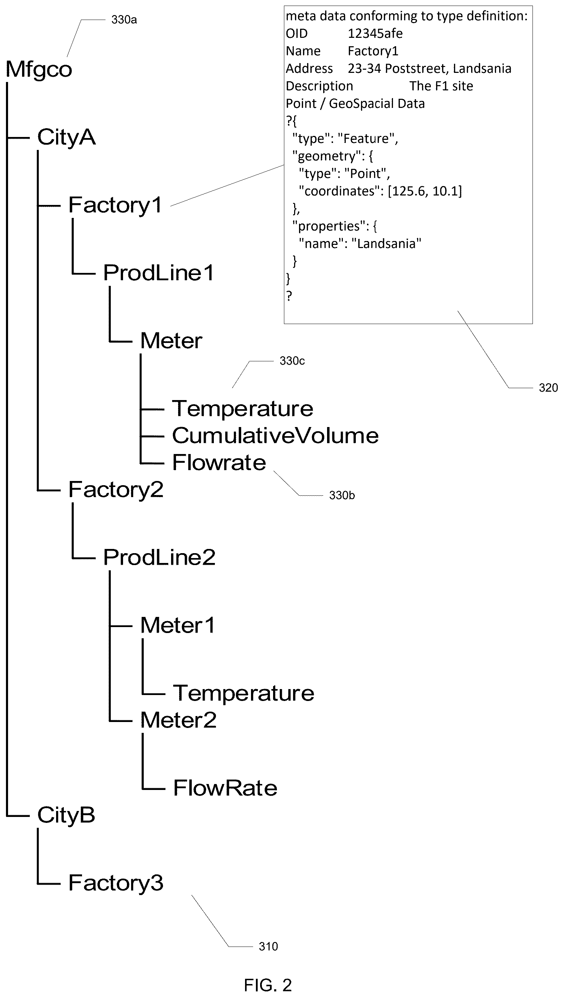

An example of a portion of an information hierarchy 310 corresponding to the organisation Mfgco shown in Figure 1 in accordance with examples of the present disclosure is shown in Figure 2.

In the example of Figure 2, nodes 330 in the information hierarchy 310 are arranged in six hierarchical layers. At the highest layer, a root node 330a corresponds to the organisation. A 'flowrate' node 330b corresponding to a single (flow rate) data stream is an example of a node at the lowest level.

In the example of Figure 2, meter node 330d corresponds to a meter data source (specifically, the first sensor device 240a). In some examples, a piece of equipment in the operations system, such as a data source, does not have a corresponding node. This can simplify a display of the information hierarchy and provide an improved user interface because, for example, a specific source of a data stream (e.g., the data source or sensor equipment) may not be of interest to a user of the management system 280. In some examples a node corresponding to each data source is included.

As described above, one or more (and preferably all) of the nodes 330 in the information hierarchy 310 are associated with a respective node type. By way of example, Figure 2 shows the parameter values (or 'meta data') associated with a 'Factory1' node 330c, which corresponds to the 'Factory1' site 220a shown in Figure 1. The 'Factory1' node 330c is associated with a 'site' node type, which defines the following parameters: object identifier ('OID'), Name, Address, Description, Point/Geospatial data. Values 320 of these parameters for the 'Factory1' node 330c are shown in Figure 2.

One or more parameter values associated with a node may be in the form of human-readable text. The user interface provided by the management system 380 may display the parameter values associated with a node in order to provide a user with relevant context and information about a particular node. The user interface may display the parameter values associated with a node together with a representation of the node. The node may be shown in context within the information hierarchy 310, for example together within one or more of its child nodes. Because the 'Factory1' node 330c is a category node, a user can readily recognise that parameter values of the 'Factory1' node 330c also apply to one or more of its child nodes. In some examples, a node is shown together with one or more of its parent nodes.

With reference to the example of Figure 2, a user interface display which shows some or all of the values 320 for the 'Factory1' node 330c together with the flowrate node 330b can indicate to a user that a cumulative volume measurement is measured on a 'ProdLine1' at a site whose address is 23-34 Poststreet, Landsania.

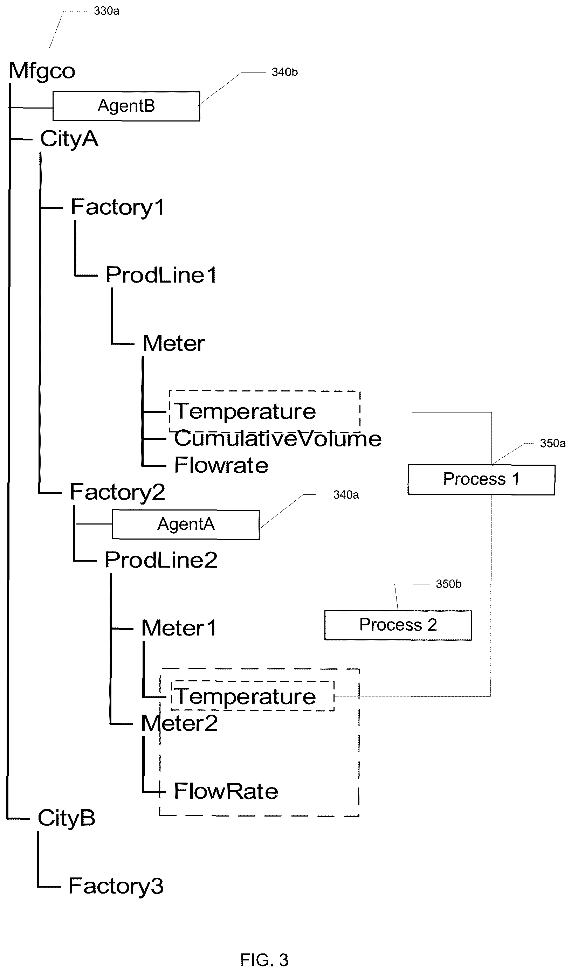

Figure 3 shows the information hierarchy 310 described above and illustrates examples of the use of agents 270 in the context of the information hierarchy to implement processing of messages in the publish/subscribe messaging system of Figure 1.

In accordance with examples of the present disclosure, an agent 270 may be represented by and/or associated with an agent node 340 in the information hierarchy 310. In some examples, the agent node 340 may be a child node of a parent node, in the case where the agent 270 is able to process messages carrying data associated with all data streams whose corresponding nodes are child nodes of the parent node.

In general, an agent may be associated with one or more data stream nodes whose data (in the form of messages) it is able to process. In some examples, the user interface provided by the management system 280 displays the association between an agent 270 and one or more nodes 330. This may be by displaying the associated agent node 340 within a portion, or all, of the information hierarchy 310.

In the example of Figure 3, a first agent node 340a corresponding to the first agent 'AgentA' 270a is shown in the information hierarchy as a child node of the node 330 corresponding to the 'Factory2' site 220b, because the first agent 'AgentA' 270a is associated with the first edge publisher client 250a; this is the only data source within the 'Factory2' site 220b, and the first agent 'AgentA' 270a is accordingly able to process messages carrying data generated by all data sources within the 'Factory2' site 220b.

Similarly, a second agent node 340b corresponding to the second agent 'AgentB' 270b is included within the information hierarchy 310 as an immediate child node of the root node 330a corresponding to the organisation Mfgco, because the second agent 270b is associated with the data broker 260, through which all published messages in the organisation pass. Accordingly, the second agent 270b is able to process data generated by all data sources within the organisation.

The information hierarchy 310 and the nodes 330 therein may be used as the basis for defining a process to be performed at one or more agents 270.

Figure 3 shows, schematically, the scope of two example processes 350a, 350b which may be implemented in accordance with examples of the present disclosure.

A first process 'Process 1' 350a is based on temperature data on both Production Line 1 230a (which is located in Factory 1 220a) and Production Line 2 230b (located in Factory 2 220b). According to the first process 350a, an alarm message is to be generated if either the 10-second average readings of the Production Line 1 temperature exceed a threshold, or if the 30-second average readings of the Production Line 2 temperature exceed the threshold.

As described further below, in accordance with examples of the present disclosure, the management system 280 determines that the first process 350a is to be implemented jointly at the first agent 'Agent A' 340a and at the second agent 'Agent B' 340b.

According to the second process 350b, flow rate data for the Production Line 2 230b is not needed and is therefore to be suppressed, unless the 30-second average readings of the Production Line 2 temperature exceed the threshold used for the first process 350a.

As described further below, in accordance with examples of the present disclosure, the management system 280 determines that the second process 350b is to be implemented solely at the first agent 'Agent A' 340a.

The determination of the first process 350a and the second process 350b may be by means of the user interface provided by the management system 280; for example, a user may enter, copy or upload human readable code that defines the first process 350a and the second process 350b, by reference to the relevant nodes 330 in the information hierarchy 310. It will be appreciated that, to define the first process 350a and the second process 350b, the user does not require any understanding or awareness of the manner in which temperature or flow rate data is generated and transmitted within the publish/subscribe messaging system.

As described above, an agent is deployed within a publish/subscribe messaging system and is configured to process messages within the messaging system. In some examples, the agent is provisioned with information of one or more nodes in the information hierarchy, and their associated respective type. In some examples, the agent is provisioned with mapping information to allow it to identify, based on a message in the messaging system, that the message contains data associated with a node in the information hierarchy, and to extract that data.

The agent may be provisioned with the arrangement of the nodes in the information hierarchy. The agent processes the messages based on the information associated with the one or more nodes.

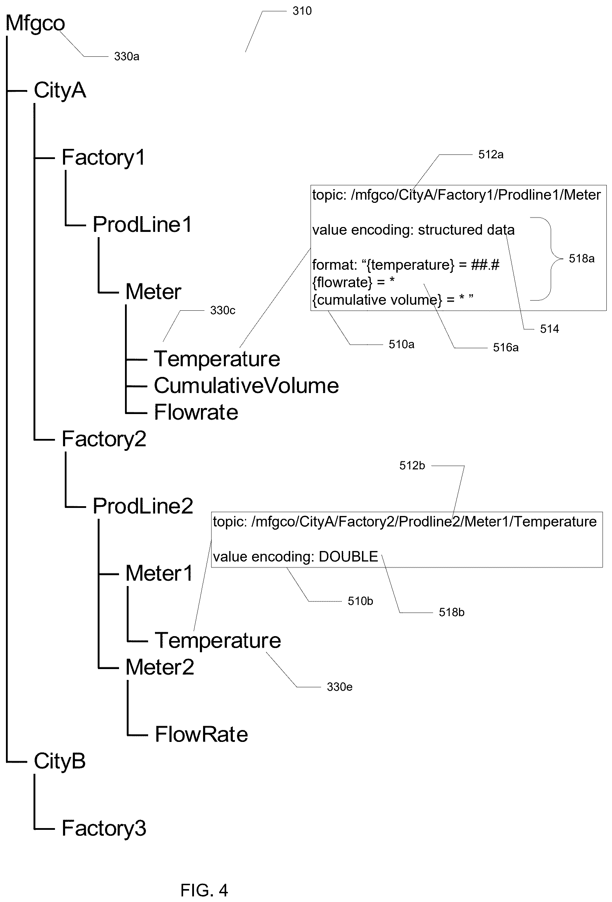

Figure 4 shows an example of mapping information for nodes, in accordance with examples of the present disclosure. Figure 4 shows the information hierarchy 310 and an example of first mapping information 510a for data stream node 330c, which relates to Temperature at Production Line 1. The first mapping information 510a comprises a first topic identifier 512a, a first value encoding 514a and a first format descriptor 516a. The first value encoding 514a and first format descriptor 516a are, collectively, an example of a first payload decoding rule 518a.

In the example of Figure 4, the first topic identifier 512a indicates a topic "/mfgco/CityA/Factory1/Prodline1/Meter" which is used for a published message indicating the temperature; the first format descriptor 516a indicates a location indicated by "##.#", within a message payload, of the encoded temperature value; and the first value encoding 514a indicates a method of encoding the temperature value within the payload.

In some examples, the mapping information may comprise only a topic identifier. In some examples, the mapping information may comprise only a payload decoding rule 518.

In some examples, the payload decoding rule may be provided in the form of instructions for extracting the relevant data from the message payload.

In some examples, there may be multiple mapping information 512 for a given node. For example, where a single data stream is published in different formats and/or using different topics, a mapping information 512 may be determined for each such format and topic combination, to ensure that all data associated with that data stream can be extracted.

As in the second example shown in Figure 4, the message payload may comprise only a single data point, and the payload decoding rule 518 may comprise a type definition for the data point.

In the second example shown in Figure 4, a second mapping rule 510b is shown for a Temperature node 330e. In this example, messages conveying the Temperature data points contain only numeric values, encoded using a pre-determined format, and no other contents. Accordingly, it is sufficient in this case to include in the second mapping rule 512b only a second topic identifier 512b and a second payload decoding rule 518b. The second topic identifier 512b indicates that the value corresponding to the node 330e is encoded within messages identified by the topic "/mfgco/CityA/Factory2/Prodline2/Meter1/Temperature". The second payload decoding rule 518b indicates that the value corresponding to the node is encoded as a 'DOUBLE' value. In this example, a DOUBLE value is pre-determined to correspond to an IEEE 754 double-precision floating-point value with 64bit (8 bytes).

A respective mapping rule may be determined for each of the data stream nodes in the information hierarchy 310.

The mapping rules 512 allow an agent 270 to determine that a message within the publish/subscribe messaging system includes a representation of data associated with a node 330 in the information hierarchy, to extract that data and, in some examples, to process that data. In an example, the second agent 270b extracts temperature data from messages using the first mapping rule 512a and the second mapping rule 512b shown in Figure 4 and, based on the extracted data, performs the first process 350a shown in Figure 3.

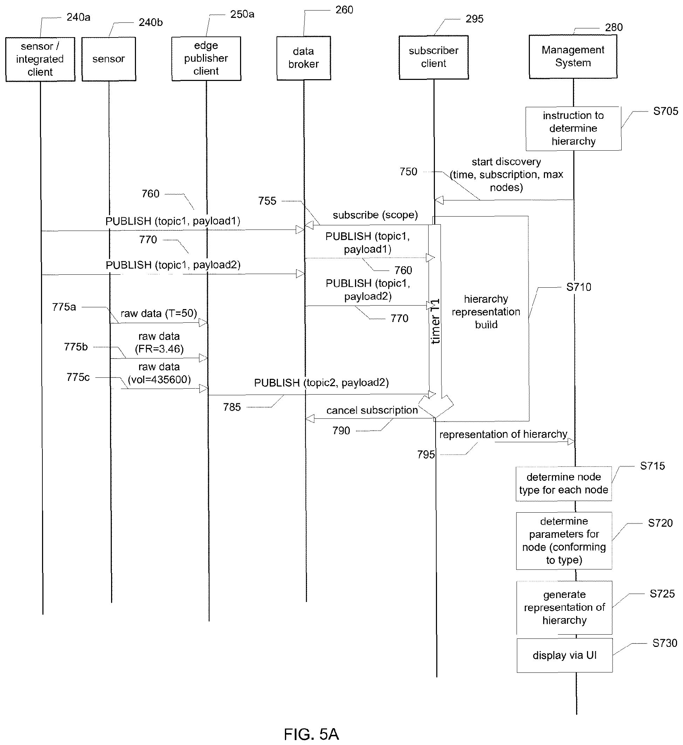

Figure 5A shows a combined process and message sequence chart in which an information hierarchy (or a portion thereof) is automatically determined for the publish/subscribe messaging system of Figure 1, in accordance with examples of the present disclosure.

In the example of Figure 5A, in addition to the elements of the publish/subscribe messaging system shown in Figure 1 and described above a subscriber client 295 is connected to the management system 280.

The process of Figure 5A starts with step S705, in which the management system 280 receives an instruction or otherwise determines that hierarchy determination is to occur. The instruction may be received from a user via a user interface, such as via a web client. The instruction may specify one or more of a scope of the determination procedure, a duration for the determination procedure and a maximum number of nodes to be identified in the procedure.

The management system 280 may determine that hierarchy determination is to occur based on pre-determined criteria. For example, the hierarchy determination may occur as part of an initialisation procedure of the management system 280.

In response to the determination at step S705, the management system 280 transmits a start discovery request 750 to the subscriber client 295. The start discovery request 750 may comprise one or more of the scope, duration and maximum number of nodes, determined at step S705.

In response to receiving the start discovery request 750, the subscriber client 295 performs a hierarchy representation building process S710.

The hierarchy representation building process S710 comprises determining, based on messages within the publish/subscribe messaging system, the relative location within an information hierarchy of two or more nodes. Each node corresponds to a data stream, data source or category.

The subscriber client 295 accesses messages passing through the data broker 260. In the example of Figure 5A, this access is obtained by sending a subscribe request 755 to the data broker 260. The subscribe request 755 is sent using the publish/subscribe network. In other examples, the subscribe request 755 is sent using an application programming interface (API) of the data broker 260 to which the subscriber client 295 has access. The subscribe request may comprise a subscription scope indication, defining a set of messages that the subscriber client 295 wishes to obtain access to. The set of messages may be determined by the subscriber client 295 based on the scope of the determination procedure indicated in the start discovery request 750.

The hierarchy representation building process S710 may be performed for a pre-determined time duration. In the example of Figure 5A, the subscriber client 295 starts a timer T1 for a duration corresponding to the duration indicated in the start discovery request 750.

In the example of Figure 5A, the subscriber client 295 accesses a first publish message 760, a second publish message 770 and a third publish message 785. In the example of Figure 5A, these messages are forwarded to the subscriber client 295 in accordance with its subscription request 755.

In response to accessing a published message, the subscriber client 295 identifies, based on one or more of a topic associated with the message and a payload of the message, one or more nodes in the information hierarchy.

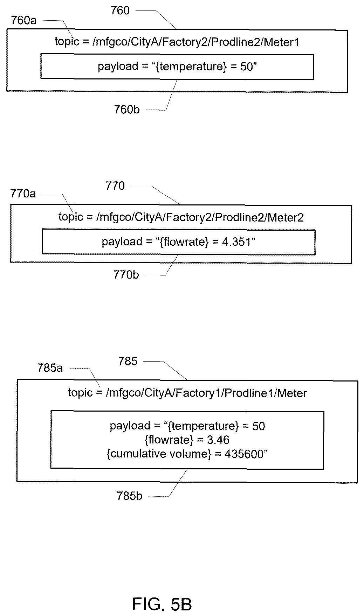

The first publish message 760 comprises a first topic 760a and a first payload 760b, shown in Figure 5B. The first publish message 760 is published by the integrated client 240a, with a topic of "/mfgco/CityA/Factory2/Prodline2/Meter1" and a payload of "{temperature} = 50". Based on this message, the subscriber client 295 determines that a 'temperature' data stream node exists within the information hierarchy. Furthermore, the subscriber client 295 determines that category nodes "Meter1", "Prodline2", "Factory2", "CityA" and "mfgco" are parents of the temperature data stream node at progressively higher layers in the information hierarchy.

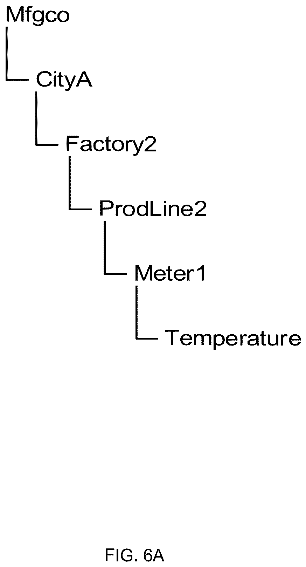

The subscriber client 295 accordingly generates an initial representation of the hierarchy shown in Figure 6A.

The second publish message 770 comprises a second topic 770a and a second payload 770b, shown in Figure 5B. The second publish message 770 is published by the integrated client 240a, with a topic of "/mfgco/CityA/Factory2/Prodline2/Meter2" and a payload of "{flowrate} = 4.351". Based on this message, the subscriber client 295 determines that a 'flowrate' data stream node exists within the information hierarchy. Furthermore, the subscriber client 295 may determine that nodes identifies based on a message correspond to those previously identified. determines that category nodes "Meter2", "Prodline2", "Factory2", "CityA" and "mfgco" are parent nodes of the flowrate data stream node at progressively higher layers in the information hierarchy.

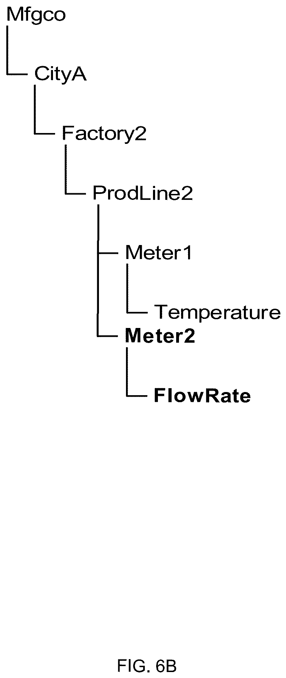

The subscriber client 295 determines that the category nodes "Prodline2", "Factory2", "CityA" and "mfgco" are the same as those determined from the first publish message 760 and determines that the new "Meter2" node is a child node of the (already identified) Prodline2 node. Accordingly, the subscriber client 295 updates the representation of the hierarchy, as shown in Figure 6B.

The third publish message 780 comprises a third topic 780a and a third payload 780b, shown in Figure 5B. The third publish message 780 is published by the edge publisher client 250a, based on raw data readings 775a-c generated at the sensor device 240b.

The third publish message 780 has a topic of "/mfgco/CityA/Factory1/Prodline1/Meter" and a payload of "{temperature} = 50 {flowrate} = 3.46{cumulative volume} = 435600". Based on the payload 780b, the subscriber client 295 determines that 'temperature', 'flowrate' and 'cumulative volume' data stream nodes exists within the information hierarchy. The subscriber client 295 determines that category nodes "Meter1", "Prodline1", "Factory1", "CityA" and "mfgco" are parents of these data stream nodes at progressively higher layers in the information hierarchy.

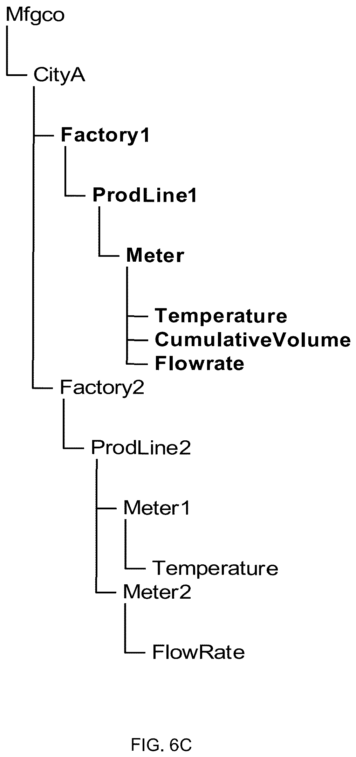

The subscriber client 295 determines that the category nodes "CityA" and "mfgco" are those determined from the first publish message 760, and determines that the new "Factory1" node is a child node of the (already determined) CityA node. Accordingly, the subscriber client 295 updates the representation of the hierarchy, as shown in Figure 6C.

In the example of Figure 5A, the subscriber client 295 determines nodes and their respective locations in the hierarchy based on the topic, where text between (or following) a '/' character represents a node, and successive nodes are listed in the order in which they should apply in the hierarchy. In some examples, the topic is constructed in accordance with an 'ISA-95' (ANSI/ISA-95 Enterprise-Control System Integration", known internationally as IEC/ISO 62264) specification.

In other examples, node information is extracted from a payload of a message, in accordance with decoding rules provided to the subscriber client 295 by the management system 280.

First, second and third publish messages 770, 780, 785 are received at the data broker 260 while the timer T1 is running, and accordingly are used to build or update the hierarchy representation.

In general, the subscriber client 295 accesses one or more messages in the publish/subscribe messaging system and, based on a topic associated with the messages and/or based on a payload of the messages, identifies nodes in the information hierarchy. The subscriber client 295 determines the relative location of the identified nodes in the hierarchy.

The subscriber client 295 may determine that one or more nodes identified based on a message correspond to those previously identified. If all of the nodes correspond to those already identified, then there may be no update to the hierarchy representation. If one or more nodes do not correspond to those already identified, then these nodes may be added to the information hierarchy in locations determined according to the relative overlap of the identified nodes and those already in the hierarchy.

The subscriber client 295 may determine that none of the nodes identified based on a message correspond to those previously identified. In such a case, the hierarchy representation may comprise disjoint, unconnected portions. One or more subsequent messages may result in the identification of additional nodes common to the unconnected portions, and the hierarchy representation may be modified to show the relationship between the previously unconnected nodes.

When timer T1 expires, the subscriber client 295 stops accessing messages for the purpose of updating the hierarchy representation. In the example of Figure 5A, this comprises sending a cancel subscription message 790 to the data broker 260, and step S710 ends.

The subscriber client 295 then transmits to the management system 280 a representation of the hierarchy 280.

At step S715, the management system 280 determines an object type for each node. This may be based on the ISA-95 system, and/or may be based on user input at a user interface. The node type for a node may be selected from a set of predefined node types.

At step S720, the management system 280 determines values for parameters for each node, in accordance with the respective node type for the node determined at step S715. This may be based on user input at a user interface.

At step S725, a visual representation of the information hierarchy (or a portion thereof) is generated. This may comprise the use of icons, selected according to the type of a node, to represent nodes.

At step S730, the visual representation is displayed via a user interface. The user interface may permit a user to view the arrangement, type and parameter values associated with nodes. The user interface may permit a user to specify, based on the nodes, processing to be carried out in respect of messages within the publish/subscribe messaging system. In such a case, the process may continue with a process for processing messages within the publish/subscribe messaging system.

In the example of Figure 5A, the subscriber client 295 generates a representation of the hierarchy 795 and transmits this to the management system 280. This may correspond to the information shown in Figure 6C.

In other examples, the information transmitted to the management system 280 may be different. For example, the subscriber client 295 may transmit a copy of, or extract of, one or more messages received during step S710, and the management system 280 may perform the detection of nodes and determination of their respective locations in the information hierarchy. For example, the subscriber client 295 may transmit a list of topics received. In some examples, the subscriber client 295 may de-duplicate the list before sending it to the management system 280.

In some examples, the subscriber client may determine that the number of nodes in its stored representation of the hierarchy has met or exceeded the maximum number indicated in the start discovery request 750. In response, the client 295 may terminate step S710.

In some examples, timer T1 is not used and step S710 is terminated after a pre-determined time, or when a maximum number of nodes have been identified.

Similarly, in some other examples, one or more of steps S715, S720, or portions thereof, may be performed at the subscriber client 295.

In some examples, the management system 280 performs all of the steps of the process described above as being performed by the subscriber client 295. Accordingly, in some examples, the subscribe request 755 and cancel subscription request 790 are sent from the management system 280 and the published messages 760, 770, 785 are received at the management system 280. In some such examples, there is no start discovery request 750 and no representation of hierarchy 795 transmitted.

In the example of Figure 5A, the subscriber client 295 accesses messages passing through the publish/subscribe messaging system by behaving as a subscriber client with respect to the data broker 280. That is, the subscriber client 295 proactively requests the data broker to forward received messages to it.

In some examples, in response to the determination at step S705, the management system 280 selects one or more subscriber clients from a plurality of subscriber clients in the publish/subscribe messaging system, and transmits a corresponding request 750 to each of the selected subscriber clients. The selected one or more subscriber clients may be based on the scope indicated in the instruction at step S705. The subsequent subscribe requests 755 may be transmitted to different data brokers.

In general, in some examples, the management system 280 may transmit respective start discovery requests 750 to two or more subscriber clients 295, and accordingly may receive respective representations of the hierarchy 795.

After the management system 280 receives the respective representations of the hierarchy 795 from the selected subscriber client(s), the management system 280 may aggregate or combine the respective representations, to generate a single combined hierarchy. This aggregation or combination may comprise detecting and removing duplicate nodes.

Depending on the time allowed and the rate at which messages are published, the extent of the determined information hierarchy may vary. In some examples, the use of one or more subscriber clients 295 having access to messages in the publish/subscribe messaging system may allow a complete information hierarchy 310, such as that shown in Figure 2, to be determined.

In the example of Figure 5A, the determined information hierarchy is displayed via a user interface. In some examples, respective portions of the determined information hierarchy are determined for respective agents and indications of the portions are transmitted to the respective agents. Accordingly, the agents may monitor and process data in accordance with the information hierarchy.

In some examples, the determined information hierarchy is used as a basis for defining desired processing, to be carried out by one or more of the agents. The defining of the desired processing maybe by means of the user interface, or may be by means of scripts or other computer readable code based on the information hierarchy; for example, variables within a script or code may refer to one or more nodes within the information hierarchy.

Examples of the present disclosure can provide a method of generating an information hierarchy comprising nodes, at least one of the nodes corresponding to a respective data source. The information hierarchy may be displayed on a user interface to provide an intuitive and logical representation of data sources within a publish/subscribe messaging system. The information hierarchy may avoid the need for a user to be aware of topics used in the publish/subscribe messaging system. Portions of the information hierarchy may be deployed to agents within the publish/subscribe messaging system, for allowing the agents to interpret messages within the publish/subscribe messaging system.

The information hierarchy may be used as a basis for defining processing to be carried out at one or more of the agents. In examples of the present disclosure, no modification is necessary to the underlying publish/subscribe messaging system, and the information hierarchy can be determined and maintained, irrespective of the manner in which the publish/subscribe system is used.

In some examples, an automatic hierarchy determination procedure may be followed by modifications to the information hierarchy by the user. These modifications may comprise one or more of an addition, removal or moving of a node within the information hierarchy 310, the assignment of a parameter type to a node, or the setting or modification of a parameter value for a node.

In some examples, the connection between the agent and management system is by means of the publish/subscribe messaging system, and the details comprise one or more topics to be used for messages generated at the agent which are destined for the management system, and one or more topics to be used for messages generated at the management system which are destined for the agent and to which the agent should subscribe.

It will be appreciated that the messages and processing sequences shown in Figure 5A are by way of example, and that the scope of the present disclosure is not limited to the specific sequence of processing steps, messages and arrangement of devices shown in Figure 5A. In some examples, one or more of the steps shown may be omitted, and in some examples, steps may be performed in a different order (including where some steps are performed substantially in parallel). For example, the determination of the parameters at step S720 may be performed after the display via the user interface at step S730.

Following the determination of the information hierarchy in accordance with examples herein, the information hierarchy may be used as disclosed in co-pending application AGENT AND MANAGEMENT SYSTEM FOR A MESSAGING SYSTEM.

The information hierarchy 310 provides a human-readable, abstracted representation of the various data being communicated within the publish/subscribe messaging system, which may be decoupled from the form and content of messages actually published within the system. Accordingly, it is not necessary for published messages in the publish/subscribe messaging system to use human-readable topics or payloads.

In some examples, the management system 280 generates a user interface for displaying the information hierarchy. In some examples, the user interface provides a different set of information or there may be no user interface at all. In some examples, a user or remote system interacts with the management system via an application programming interface, which is used to communicate one or both of the information hierarchy and the desired processing.

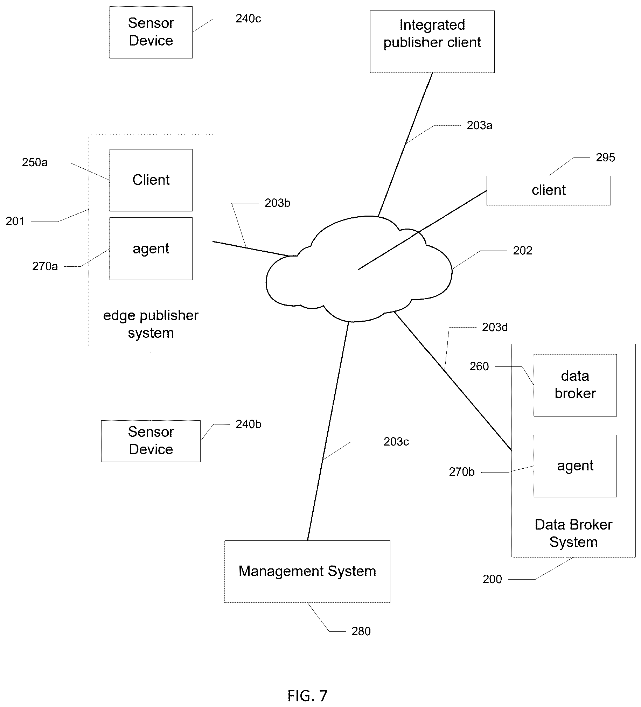

Figure 7 is a simplified network diagram showing some of the elements shown in Figure 1, arranged in accordance with examples of the present disclosure. For clarity and conciseness, not all of the elements of Figure 1 are shown in Figure 7.

In the example arrangement shown in Figure 7, first agent 270a is implemented together with first edge publisher client 250a on edge publisher system 201. Accordingly, edge publisher system 201 performs the functions of the first edge publisher client 250a and first agent 270a described herein. The edge publisher system is connected to the second sensor device 240b and the third sensor device 240c.

Similarly, the second agent 270b is implemented together with data broker 260 on data broker system 200. Accordingly, data broker system 200 performs the functions of the data broker 260 and second agent 270b as described herein.

It will be appreciated that the arrangement shown in Figure 7 are not limiting, and in some examples, one or both the first agent 270a and the second agent 270b are implemented as separate systems. In some examples, the data broker system 200 and/or the client system 295 are implemented as distributed systems. In some examples, the data broker system 200 and/or the client system 295 are implemented in a cloud computing environment.

In the example of Figure 7, agents are configured within the arrangement. In some examples, an information hierarchy determination process, such as shown in Figure 5A, occurs before any agent is deployed in an environment. In some examples, an information hierarchy determination process occurs when agents are deployed, but have not yet received any processing instructions or any representation of the information hierarchy. In particular, there may be no agent 270b deployed at the data broker system 200.

In the example of Figure 7, the edge publisher system 201, data broker system 200, integrated publisher client 240a, client system 295 and management system 280 are connected, via respective communication links 203, to a communications network 202. The communications links and communications network 202 may comprise one or more connections operated in accordance with any suitable communications protocols. The communications network 202 may comprise two or more networks; for example, it may comprise one or more of a corporate intranet, a wide area network (such as the internet), a cellular network.

In some examples, one or more of the elements shown in Figure 7 may be connected by point-to-point links. For example, where the second agent 270b and data broker 260 are implemented on discrete systems, the respective systems may be connected via a point to point connection, and not via the communications network 202.

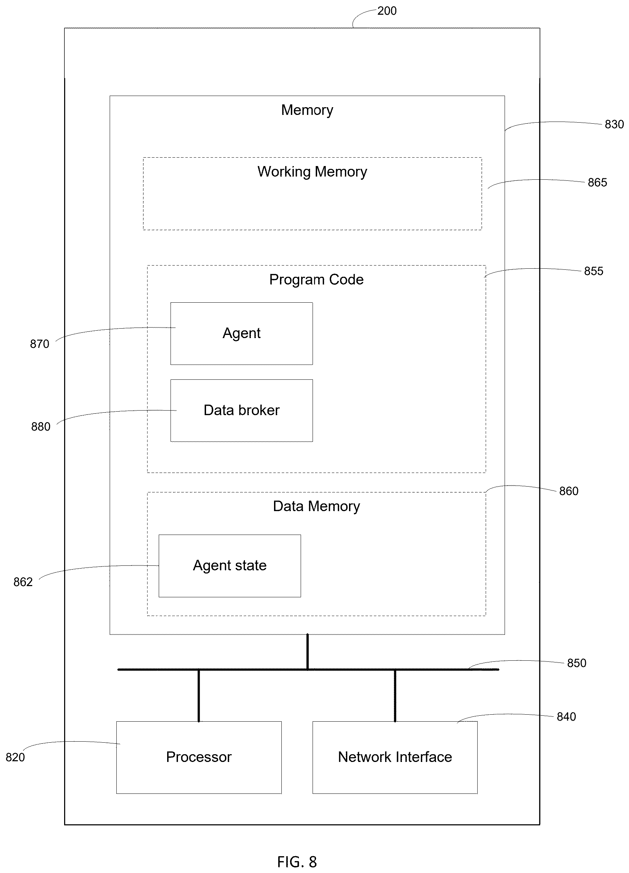

Figure 8 is a simplified block diagram of the data broker system 200 of Figure 7 in accordance with examples. As shown, the data broker system 200 includes a processor 820, memory 830, and a network interface 840 which are coupled by a bus interface 850. The network interface 840 is for bidirectional communication. The memory 830 comprises a storage medium on which is stored program code 855, a data memory 860 and a working memory 865.

The program code 855 may comprise agent computer program code 870, and data broker computer program code 880 which, when executed by the processor 820, cause the data broker system 200 to implement, respectively, the second agent 270b, and the data broker 260 described above. In general, the program code 855 when executed by the processor 820, causes the data broker system 200 to implement one or more of the processes of the data broker 260 and second agent 270b described above.

The data memory 860 comprises an agent state region 862 within which is stored state information associated with the agent for allowing the second agent 270b to implement any suitable state machine(s) for performing processing described above.

The working memory 865 may be used for the temporary storage of other variables and state, such as buffers of messages, and state associated with messaging connections.

In some examples, the data broker system 200 may comprise more than one processor. In some examples, the data broker system 200 may comprise more than one network interface. As described above, in some examples there may be no agent functionality at the data broker system 200.

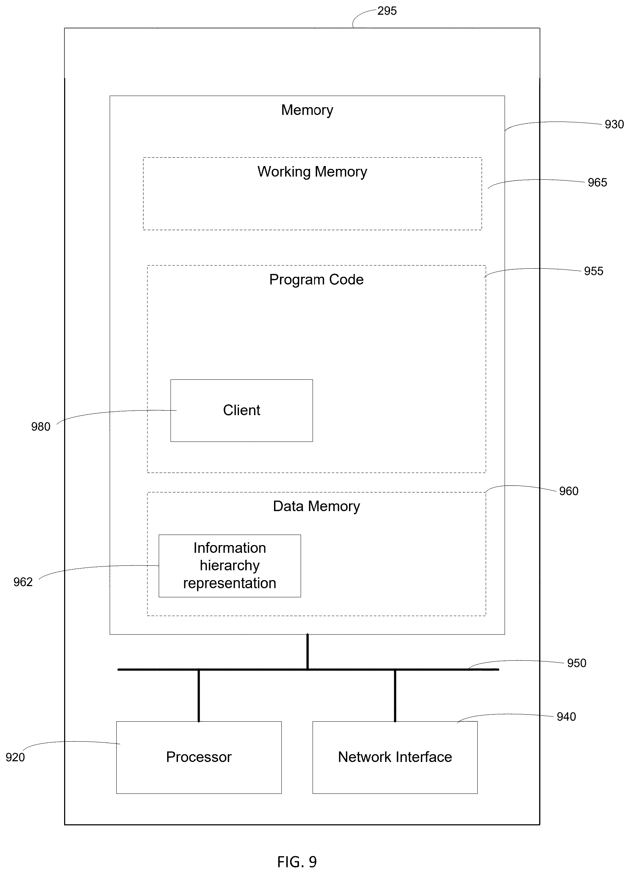

Figure 9 is a simplified block diagram of the client system 295 of Figure 7 in accordance with examples. As shown, the client system 295 includes a processor 920, memory 930, and a network interface 940 which are coupled by a bus interface 950. The network interface 940 is for bidirectional communication. The memory 930 comprises a storage medium on which is stored program code 955, a data memory 960 and a working memory 965.

The program code 955 may comprise client computer program code 980 which, when executed by the processor 920, cause the client system 295 to implement, respectively, the client 295 described above. In general, the program code 955 when executed by the processor 920, causes the client system 295 to implement one or more of the processes of the client system 295described above.

The data memory 960 comprises an information hierarchy representation region 962 within which is stored a representation of the information hierarchy, which is modified as the client system 295 modifies its knowledge of the information hierarchy.

The working memory 965 may be used for the temporary storage of other variables and state, such as buffers of messages, and state associated with messaging connections.

In some examples, the client system 295 may comprise more than one processor. In some examples, the client system 295 may comprise more than one network interface.

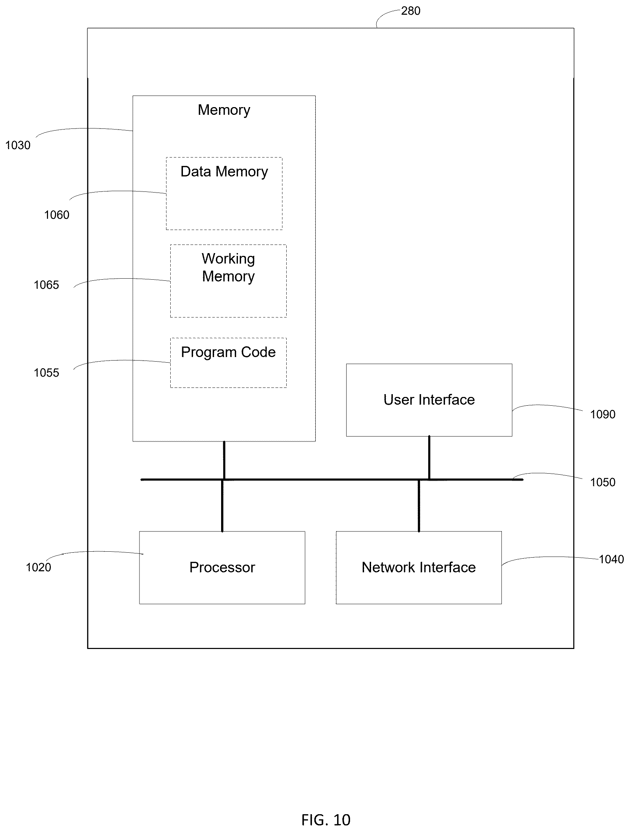

Figure 10 is a simplified block diagram of the management system 280 described above, in accordance with examples. As shown, the management system 280 includes a processor 1020, memory 1030, network interface 1040, and user interface 1090 which are coupled by a bus interface 850. The network interface 1040 is for bidirectional communication. The memory 1030 comprises a storage medium on which is stored program code 1055, a data memory 1060 and a working memory 1065.

The program code 1055 when executed by the processor 1020, causes the management system 280 to implement the processes of the management system 280 as described above. The working memory 1065 may be used for the temporary storage of variables and state.

In some examples, the management system 280 may comprise more than one processor. In some examples, the management system 280 may comprise more than one network interface. As described above, in some examples the user interface 1090 is provided by means of a web server and (not shown) separate web client device, such as a system operating a web browser application. In some such examples, the program code 1055 may comprise code which when executed causes the management system 280 to provide a web server for connecting to a web client on which the user interface is deployed.

In some examples, one or more of the data broker system 200, client system 295 and management system 280 may be implemented using a plurality of respective devices, in a distributed architecture. In this case, the portions of memory 830, 930, 1030 shown in Figure 8, Figure 9 and Figure 10 may be distributed, so that some device instances do not include all of the memory regions shown in the respective figure.

The processors 820, 920, 1020 may be of any type suitable and may include one or more general purpose computers and application-specific integrated circuits as non-limiting examples. The storage media on which program code 855, 955, 1055 is stored may be non-transitory storage media.

The above examples are to be understood as illustrative examples. Further examples are envisaged. For example, systems as discussed herein may be deployed in other configurations and scenarios in which generated messages may be generated and transmitted by clients in a manner which is unexpected or undesirable. It is to be understood that any feature described in relation to any one example may be used alone, or in combination with other features described, and may also be used in combination with one or more features of any other of the examples, or any combination of any other of the examples. Furthermore, equivalents and modifications not described above may also be employed without departing from the scope of the disclosure, which is defined in the accompanying claims.

## Claims

1. A method comprising:
generating an information hierarchy comprising one or more nodes corresponding to respective data sources, wherein
each of the one or more nodes is associated with one of a plurality of predetermined types defining a respective set of one or more parameters associated with a node of that type,
messages based on data generated by the data sources are published within a publish/subscribe messaging system in accordance with a publish/subscribe messaging protocol,
the publish/subscribe messaging system comprises a publish/subscribe data broker, and one or more publisher clients, each publisher client being associated with one or more of the data sources and generating the messages based on the data generated by the one or more data sources,
the messages each comprise a payload and a topic, and
the information hierarchy is generated based on the topic of one or more of the messages.

2. A method according to claim 1, wherein the location within the information hierarchy of a node corresponding to a data source reflects a location of the respective data source within a topology of an organisation.

3. A method according to claim 1 or claim 2, wherein the information hierarchy is generated based on the payload of one or more of the messages.

4. A method according to any of claims 1 to 3, the method comprising:
generating a representation of the information hierarchy, and
presenting the representation of the information hierarchy on a user interface.

5. A method according to any of claims 1 to 4, wherein the information hierarchy comprises one or more nodes associated with respective data streams.

6. A method comprising:
accessing, by a client in a publish/subscribe messaging system in which messages based on data generated by data sources are published within a publish/subscribe messaging system in accordance with a publish/subscribe messaging protocol, one or more of the messages,
identifying, based on the one or more messages, nodes of an information hierarchy and a respective location within the hierarchy of the nodes, the information hierarchy comprising one or more nodes corresponding to respective data sources,
generating a representation of the information hierarchy, and
transmitting the representation of the information hierarchy to a management system of the publish/subscribe messaging system.

7. A method according to claim 6, wherein accessing the one or more messages comprises:
transmitting to a data broker of the publish/subscribe messaging system a subscription request, requesting the data broker to forward published messages to the client, and
receiving the one or more messages from the data broker.

8. A method according to claim 6 or claim 7, further comprising:
receiving from a management system of the publish/subscribe messaging system a start discovery request, wherein the accessing the one or more messages is in response to receiving the start discovery request.

9. A method according to claim 8, wherein the start discovery request comprises one or more of:
an indication of a time duration for accessing the one or more messages;
a scope defining a category of messages to be accessed; and
a maximum number of nodes.

10. A method according to any of claims 6 to 9, wherein each of the one or more nodes is associated with one of a plurality of predetermined types defining a respective set of one or more parameters associated with a node of that type.

11. A method comprising:
selecting one or more clients in a publish/subscribe messaging system in which messages based on data generated by data sources are published within a publish/subscribe messaging system in accordance with a publish/subscribe messaging protocol,
transmitting to the selected one or more subscriber clients a request to generate a representation of an information hierarchy comprising one or more nodes corresponding to respective data sources, and
receiving from the selected one or more subscriber clients the respective representations of the information hierarchy, wherein
the publish/subscribe messaging system comprises a publish/subscribe data broker and one or more publisher clients, each publisher client being associated with one or more of the data sources and generating the messages based on the data generated by the one or more data sources.

12. A method according to claim 11, the method comprising:
determining, for one or more of the nodes, a respective type, the type being selected from a plurality of predetermined types defining a set of one or more parameters associated with a node of that type; and
determining, for the one or more of the nodes, one or more values of the parameters defined for the respective type.

13. A method according to any of claims 1 to 12, wherein the publish/subscribe messaging protocol is an MQTT or MQTT-SN messaging protocol.

14. Apparatus, comprising
a network interface,
one or more memories, and
one or more processors,
the one or more memories having stored thereon instructions, which when executed by the one or more processors, cause the apparatus to perform the method of any of claims 1 to 13.

15. A computer readable medium having stored thereon instructions which, when executed by one or more processors, cause a system to perform the method of any one of claims 1 to 13.
